# EUROPEAN PATENT SPECIFICATION

(11) **EP 3 726 498 B1**
(45) Date of publication and mention of the grant of the patent: **27.09.2023**
(21) Application number: 18887801.1
(22) Date of filing: 12.12.2018
(51) Int. Cl.: G08G 1/14, B62D 15/02

(54) **AUTOMATIC PARKING METHOD AND DEVICE, INTELLIGENT VEHICLE AND COMPUTER STORAGE MEDIUM**
VERFAHREN UND VORRICHTUNG ZUM AUTOMATISCHEN EINPARKEN, INTELLIGENTES FAHRZEUG UND COMPUTERSPEICHERMEDIUM
PROCÉDÉ ET DISPOSITIF DE STATIONNEMENT AUTOMATIQUE, VÉHICULE INTELLIGENT ET SUPPORT D'INFORMATIONS POUR ORDINATEUR

(30) Priority: 15.12.2017 CN 201711346190
(43) Date of publication of application: 21.10.2020
(73) Proprietor: NIO (Anhui) Holding Co., Ltd., Hefei City, Anhui Province (CN)
(72) Inventor: WANG, Kai, Hong Kong (CN)
(74) Representative: v. Bezold & Partner Patentanwälte - PartG mbB
(86) International application number: PCT/CN2018/120678
(87) International publication number: WO 2019/114761

(56) References cited:
- EP-A1- 2 100 778
- EP-A1- 3 088 730
- EP-B1- 0 931 712
- CN-A- 101 573 257
- CN-A- 102 508 489
- CN-A- 105 142 962
- CN-A- 105 751 908
- CN-U- 208 069 532
- DE-A1-102011 087 797
- DE-A1-102015 215 127

## Description

### Technical Field

The invention relates to the technical field of vehicles, in particular to an automatic parking method, an automatic parking device, an intelligent vehicle and a computer storage medium.

### Background Art

As a new energy vehicle, electric vehicles have been one of the key strategic emerging industries supported by China because of their advantages such as low noise, high energy efficiency and no mobile waste emission.

Combined with large-scale intensive charging, a battery rental-based battery swap mode has currently become a competitive commercial technology mode for the development of electric vehicles. The battery swap mode is by replacing a vehicle battery that is about to or has run out with a fully charged battery. With a mechanical operation, the battery replacement can be completed within only a few minutes to provide less troubles caused by long charging time compared with a charging mode.

At present, a plurality of battery charging and swap stations have been established in China to provide charging and swapping services for traction batteries of electric vehicles. However, due to the high requirements of the battery charging and swap stations for parking positions of vehicles, the vehicle positioning precision which mainly depends on the ultrasonic technology for the moment fails to meet the actual requirements.

A vehicle speed control method and system for automatic parking of an electric vehicle is disclosed in Chinese patent CN 106004515 A. The system comprises a vehicle speed sensor module, an ultrasonic sensor, a vehicle positioning module, a parking controller and a vehicle speed controller, wherein the vehicle speed sensor module is used to detect the movement speed of an electric vehicle, the ultrasonic sensor is used to acquire the information about obstacles around the electric vehicle, the vehicle positioning module is used to acquire current position information of the electric vehicle, the parking controller is used to set an ideal parking speed based on the acquired information about the obstacles, the current position information and a preset parking trajectory, and the vehicle speed controller is used to regulate the torque of an electric motor of the electric vehicle based on the movement speed and the ideal parking speed of the vehicle.

Although the above-mentioned patent can realize a parking speed control function with a minor error at a low speed, the error in the vehicle positioning precision of the ultrasonic sensor is generally 10-20 cm, and the positioning precision fails to meet the requirement of battery swapping.

EP 3 088 730 A1 describes a driver assistance apparatus included in a vehicle having an Idle Stop and Go (ISG) function. The driver assistance apparatus includes at least one camera configured to acquire a forward image or an around view image of the vehicle, and a processor configured to detect information from the image and to provide a control signal to turn the ISG function on or off based on the detected information or received navigation information.

EP 2 100 778 A1 discloses a parking assistance apparatus that performs a parking assist by recognizing a relative positional relation between a vehicle and a target parking position. An image of a mark M is taken by a camera with positioning the vehicle at a location in the vicinity of a parking space. An image processing unit extracts a characteristic point from the image of the mark M and recognizes two-dimensional coordinates on the image. A positional parameter calculation unit calculates positional parameters including six parameters of the camera with reference to the mark M. A relative position identification unit identifies a relative positional relation between the vehicle and the parking space. A parking locus calculation unit calculates a parking locus for leading the vehicle to the parking space based on the relative positional relation. A guide apparatus outputs drive operation guide information for causing the vehicle to travel along the calculated parking locus to a driver of the vehicle.

The information disclosed above in the background art of the invention is merely intended to facilitate understanding of the general background of the invention and should not be taken as an acknowledgement or any form of suggestion that the information constitutes the prior art already known to those of ordinary skill in the art.

### Summary of the Invention

In order to solve at least one of the above problems of the prior art, the invention provides an automatic parking method, an automatic parking device, and an intelligent vehicle defined by the appended independent claims. Additional features and advantages of the concepts disclosed herein are set forth in the dependent claims.

The automatic parking method comprises: recording a video of surroundings around a vehicle in real time using video capture apparatuses mounted on two sides of the vehicle after the vehicle moves into a start area for vehicle parking defined by limiting signs, wherein a plurality of guiding signs and the limiting signs are included in the surroundings around the vehicle, and wherein the plurality of guiding signs are 6 double-arrow guiding signs divided into 3 groups and arranged outside of two sides of the start area, and each group of the guiding signs has a unique colour combination; locating a first guiding sign in a video using a colour space; extracting features of the first guiding sign by means of morphological detection, the features being a shape feature and an orientation feature of the first guiding sign; obtaining a real-time position of the vehicle from the features of the first guiding sign and the limiting signs; and guiding the vehicle to a target area according to the real-time position of the vehicle.

In the method described above, the first guiding sign has a colour characteristic different from the surroundings around the vehicle, and the step of locating the first guiding sign in the video using the colour space comprises: locating the first guiding sign in the video by means of colour patch analysis.

In the method described above, the step of obtaining the real-time position of the vehicle from features of the first guiding sign comprises by means of morphological detection: determining an absolute position of the first guiding sign from the features of the first guiding sign; estimating the distances from the video capture apparatuses to the target area by calibrating pixels of the video and from the absolute position of the first guiding sign; and determining the real-time position of the vehicle at least from the distances from the video capture apparatuses to the target area.

In the method described above, the video capture apparatuses are mounted on rear view mirrors of the vehicle with a field of view covering at least one of the plurality of guiding signs.

According to another aspect of the invention, provided is an automatic parking device comprising: video capture apparatuses mounted on two sides of a vehicle and used for recording a video of surroundings around the vehicle in real time after the vehicle moves into a start area for vehicle parking defined by limiting signs, wherein a plurality of guiding signs and the limiting signs are included in the surroundings around the vehicle, and wherein the plurality of guiding signs are 6 double-arrow guiding signs divided into 3 groups and arranged outside of two sides of the start area, and each group of the guiding signs has a unique colour combination; a locating apparatus for locating a first guiding sign in a video using a colour space; a detection apparatus for extracting features of the first guiding sign by means of morphological detection, the features being a shape feature and an orientation feature of the first guiding sign, and obtaining a real-time position of the vehicle from the features of the first guiding sign and the limiting signs; and a guiding apparatus for guiding the vehicle to a target area according to the real-time position of the vehicle.

In the device described above, the first guiding sign has a colour characteristic different from the surroundings around the vehicle, and the locating apparatus is further configured to locate the first guiding sign in the video by means of colour patch analysis.

In the device described above, the detection apparatus comprises: a first determination unit for determining the features of the first guiding sign by means of morphological detection; a second determination unit for determining an absolute position of the first guiding sign from the features of the first guiding sign; an estimation unit for estimating the distances from the video capture apparatuses to the target area by calibrating pixels of the video and from the absolute position of the first guiding sign; and a third determination unit for determining the real-time position of the vehicle at least from the distances from the video capture apparatuses to the target area.

In the device described above, the video capture apparatuses are mounted on rear view mirrors of the vehicle with a field of view covering at least one of the plurality of guiding signs.

According to a further aspect of the invention, provided is an intelligent vehicle comprising an automatic parking device as previously mentioned.

According to yet a further aspect of the invention, provided is a computer storage medium comprising instructions which, when being executed, causes the automatic parking method as previously mentioned to be performed.

By means of the technical solutions of the invention, high-precision positioning can be provided for the new energy vehicle during automatic parking in a battery swap station. A conventional positioning method mainly depends on the ultrasonic technology, strongly relies on surrounding physical materials and forms, and also has a low positioning precision. According to the technical solutions of the invention, the video positioning technology is applied to the positioning of the vehicle, a parking space is arranged at a designated position in a battery swapping area, and the video capture apparatuses (such as cameras) on the periphery of the vehicle are used to record a video and extract the features of the parking space for the high-precision positioning of the vehicle with a final locating error of only 1-2 cm.

In addition, the guiding signs may be used as key position information for video detection so as to locate the position where the vehicle is located during automatic parking. The guiding signs may be arranged near the target area regardless of the position where the vehicle is located. For example, after the vehicle is driven into the battery swap station, the current absolute position of the vehicle may be determined by analyzing the video recorded by the video capture apparatuses, identifying and locating the guiding signs, and performing relative position transformation. The arrangement of the guiding signs has no special requirement on the position of the vehicle before automatic parking (as long as the video capture apparatuses can capture the guiding signs), such that more flexibility is available for driver. Moreover, the 6 double-arrow guiding signs divided into 3 groups are employed, and each group of the guiding signs has the unique colour combination such that the accuracy in identifying the guiding signs may be further improved, and the anti-fuzziness may be improved.

Other features and advantages of the method and apparatus of the invention will become apparent or can be set forth more specifically from the drawings herein and the following particular embodiments for explaining some principles of the invention together with the drawings.

### Brief Description of the Drawings

Fig. 1 is a schematic view representing an automatic parking method according to an embodiment of the invention;
Fig. 2 is a schematic structural view representing an automatic parking device according to an embodiment of the invention;
Fig. 3 is a design view representing a guiding sign according to an embodiment of the invention; and
Figs. 4 and 5 are schematic views illustrating scenarios of automatic parking according to an embodiment of the invention, respectively.

### Detailed Description of Embodiments

The following description describes specific embodiments of the invention to teach those skilled in the art how to make and use the best mode of the invention. In order to teach the principles of the invention, some conventional aspects have been simplified or omitted. Those skilled in the art will appreciate that variants from these embodiments will fall within the scope of the invention. Those skilled in the art should understand that the following features can be combined in various ways to form a plurality of variants of the invention. Thus, the invention is not limited to the specific embodiments described below, and is only defined by the claims and their equivalents.

In this specification, the terms such as "comprise" and "include" indicate that in addition to the elements and steps that are directly and explicitly described in the specification and the claims, other elements and steps that are not directly or explicitly described are not excluded in the technical solutions of the invention.

The terms such as "first" and "second" are not intended to indicate the sequences of elements in terms of time, space, size, and the like, and are only intended to distinguish between the elements.

In the context of the description, "morphological detection" refers to the detection of the morphology (including orientation, shape, etc.) of a target object. In an embodiment, the morphological detection of the guiding signs indicates extraction of the shape features and orientation features of the guiding signs.

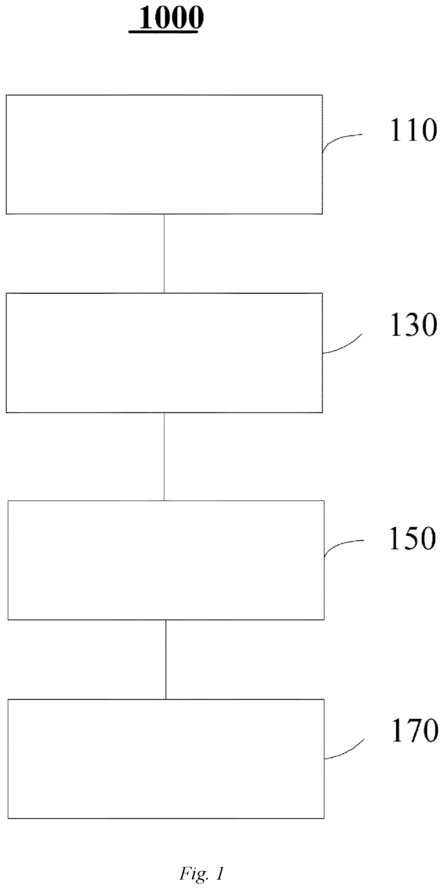

Fig. 1 is a schematic view representing an automatic parking method 1000 according to an embodiment of the invention. The automatic parking method 1000 comprises the following steps:
a step 110 during which a video of surroundings around a vehicle is recorded in real time using video capture apparatuses mounted on two sides of the vehicle, wherein a plurality of guiding signs are included in the surroundings around the vehicle;
a step 130 during which a first guiding sign is located in a video using a colour space;
a step 150 during which a real-time position of the vehicle is obtained by means of morphological detection from features of the first guiding sign; and
a step 170 during which the vehicle is guided to a target area according to the real-time position of the vehicle.

According to the video positioning method described above, based on the colour space detection and the morphological detection, the vehicle in a predetermined area is positioned in such a way that the vehicle is allowed to be automatically parked into the target area, for example, into a battery swap station for automatic battery swapping. The positioning precision may be greatly improved based on video positioning, such that the requirement of the positioning precision for the automatic parking of the vehicle in the battery swap station is met.

In an embodiment, the plurality of guiding signs are 6 double-arrow guiding signs divided into 3 groups, and each group of the guiding signs has a unique colour combination. the position where the vehicle is located may be located during the automatic parking by using the guiding signs as key position information for video detection. The guiding signs may be arranged near the target area regardless of the position where the vehicle is located. For example, after the vehicle is driven into the battery swap station, the current absolute position of the vehicle may be determined by analyzing the video recorded by the video capture apparatuses, identifying and locating the guiding signs, and performing relative position transformation. The arrangement of the guiding signs has no special requirement on the position of the vehicle before automatic parking (as long as the video capture apparatuses can capture the guiding signs), such that more flexibility is available for driver. Moreover, the 6 double-arrow guiding signs divided into 3 groups are employed, and each group of the guiding signs has the unique colour combination such that the accuracy in identifying the guiding signs may be further improved, and the anti-fuzziness may be improved.

In an embodiment, the plurality of guiding signs have colour characteristics different from the surroundings around the vehicle. In this way, the identification of the first guiding sign from the video may be facilitated to improve the identification accuracy. In this embodiment, the first guiding sign may be located in the video by means of colour patch analysis in step 130.

In an embodiment, the step 150 comprises: determining the features of the first guiding sign by means of morphological detection; determining an absolute position of the first guiding sign from the features of the first guiding sign; estimating the distances from the video capture apparatuses to the target area by calibrating pixels of the video and from the absolute position of the first guiding sign; and determining the real-time position of the vehicle at least from the distances from the video capture apparatuses to the target area. In an embodiment, the vehicle may obtain map information of the battery swap station from a cloud side, and the map information contains the absolute positions of the guiding signs. By means of the colour space detection and the morphological detection, the first guiding sign in the video is determined from the plurality of guiding signs, and the absolute position of the first guiding sign is determined from the map information. After the absolute position of the first guiding sign is determined, relative position transformation may be carried out, that is, the current absolute position of the vehicle and the position of the vehicle relative to the target area (such as a parking space for battery swapping) is obtained according to the absolute position of the detected sign and the position thereof relative to a vehicle body, such that the specific position of the vehicle during the parking may be given in real time.

In an embodiment, the video capture apparatuses are mounted on rear view mirrors of the vehicle with a field of view covering at least one of the plurality of guiding signs.

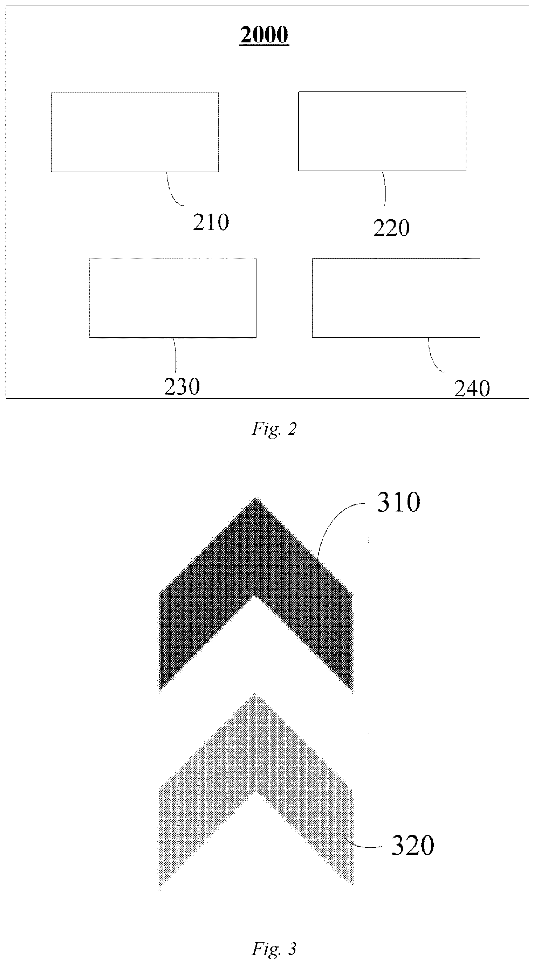

Fig. 2 shows an automatic parking device 2000. The device 2000 comprises: video capture apparatuses 210, a locating apparatus 220, a detection apparatus 230, and a guiding device 240. The video capture apparatuses 210 are mounted on two sides of the vehicle and are used to record a video of the surroundings around the vehicle in real time, wherein a plurality of guiding signs are included in the surroundings around the vehicle. The locating apparatus 220 is used to apply the colour space to locate the first guiding sign in the video. The detection apparatus 230 is used to obtain a real-time position of the vehicle from the features of the first guiding sign by means of morphological detection. The guiding device 240 is used to guide the vehicle to the target area according to the real-time position of the vehicle.

In an embodiment, the plurality of guiding signs are 6 double-arrow guiding signs divided into 3 groups, and each group of the guiding signs has a unique colour combination. the position where the vehicle is located may be located during the automatic parking by using the guiding signs as key position information for video detection. The guiding signs may be arranged near the target area regardless of the position where the vehicle is located. For example, after the vehicle is driven into the battery swap station, the current absolute position of the vehicle may be determined by analyzing the video recorded by the video capture apparatuses, identifying and locating the guiding signs, and performing relative position transformation. The arrangement of the guiding signs has no special requirement on the position of the vehicle before automatic parking (as long as the video capture apparatuses can capture the guiding signs), such that more flexibility is available for driver. Moreover, the 6 double-arrow guiding signs divided into 3 groups are employed, and each group of the guiding signs has the unique colour combination such that the accuracy in identifying the guiding signs may be further improved, and the anti-fuzziness may be improved.

In an embodiment, the first guiding sign has a colour characteristic different from the surroundings around the vehicle. In this way, the identification of the first guiding sign from the video may be facilitated to improve the identification accuracy. In this embodiment, the locating apparatus 220 may be further configured to locate the first guiding sign in the video by means of colour patch analysis.

In an embodiment, the detection apparatus 230 comprises: a first determination unit for determining the features of the first guiding sign by means of morphological detection; a second determination unit for determining an absolute position of the first guiding sign from the features of the first guiding sign; an estimation unit for estimating the distances from the video capture apparatuses to the target area by calibrating pixels of the video and from the absolute position of the first guiding sign; and a third determination unit for determining the real-time position of the vehicle at least from the distances from the video capture apparatuses to the target area.

In an embodiment, the video capture apparatuses 210 are mounted on rear view mirrors of the vehicle with a field of view covering at least one of the plurality of guiding signs.

Those skilled in the art will appreciate that the foregoing embodiments of the method of the invention may be implemented as a computer program product. Thus, the invention may for example take the form of a computer program product embodied on one or more computer-available storage media (including but not limited to a magnetic disk memory, an optical memory, and the like) containing computer-available program codes therein.

Fig. 3 illustrates a design view of a guiding sign for vehicle position detection. As shown in Fig. 3, the guiding sign is a guiding sign used on an urban highway or in a parking place. For example, it may be contemplated that the guiding sign is arranged at a designated position of a battery swap station. In an embodiment, cameras on the rear view mirrors of the vehicle are used to record a video, and the methods of colour space detection and morphological detection are applied to detect the positions of the guiding signs in the video. The guiding sign in Fig. 3 is in the form of a double-arrow, which has a first arrow part 310 and a second arrow part 320. With continued reference to Fig. 3, the first arrow part 310 is different from the second arrow part 320 in colour. In another embodiment, the first arrow part 310 is the same as the second arrow part 320 in colour. It should be pointed out that, in order to easily distinguish different groups of the guiding signs, each group of the guiding signs has a unique colour combination. For example, the first group of the guiding signs has a blue upper arrow part and a red lower arrow part, the second group of the guiding signs has a blue upper arrow part and a blue lower arrow part, and the third group of the guiding signs has a red upper arrow part and a red lower arrow part. In this way, the accuracy in identifying the guiding signs may be further improved to improve the anti-fuzziness.

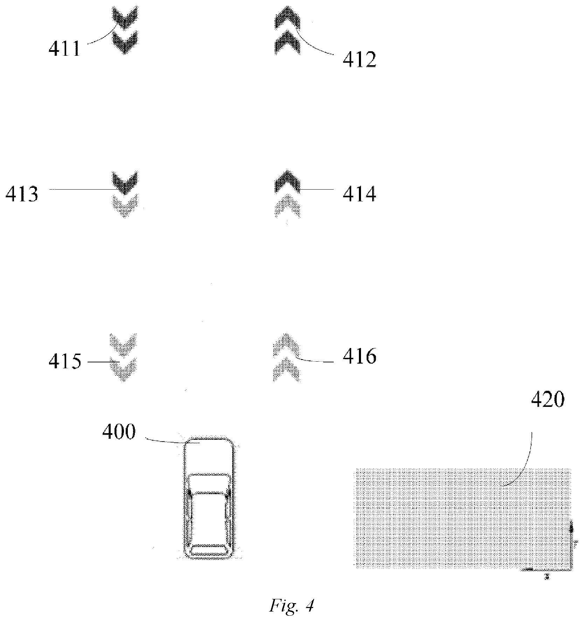

As shown in Fig. 4, an area 420 is a parking space of a battery swap station, and 6 guiding signs 411 to 416 divided into 3 groups are arranged on both sides of a reversing path of the vehicle 400 for vehicle positioning. In the detection process, firstly, the guiding signs in the video captured currently by the cameras are located by using the colour space and the morphology detection, then specific coordinate positions of the guiding signs are distinguished according to the colour space, next, relative position transformation is performed, and the current absolute position of the vehicle and the position of the vehicle relative to the parking space of battery swapping are obtained according to the absolute positions of the detected signs and the positions thereof relative to a vehicle body, such that the general specific position of the vehicle during parking is given in real time.

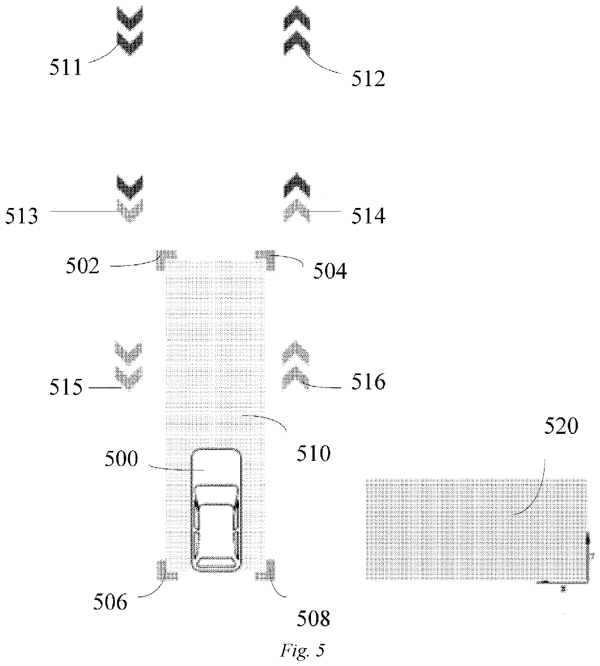

Referring next to Fig. 5, Fig. 5 shows the further use of limiting signs 502 to 508 on the basis of the use of the guiding signs 511 to 516 to provide higher-precision positioning. As shown in Fig. 5, an area 510 is a start area for vehicle parking defined by the limiting signs 502 to 508 at four corners. The area 520 is the parking space of the battery swap station (i.e., the target area). The limiting signs play a role in two stages, i.e., in an initial positioning area, wherein the vehicle is stopped in the parking space area for battery swapping, and an identification system automatically identifies an initial position of the vehicle to provide parking start information; and during the parking, as shown in Fig. 5, the identification system identifies a parking trajectory of the vehicle and assists the vehicle in entering the battery swap station safely by combining the guiding signs 511 to 516 and the limiting sings 502 to 508.

In summary, according to the solutions of the invention, the video capture apparatuses mounted on the two sides of the vehicle are mainly used to record a video of the surroundings, the important position information in the video is detected through the methods of colour space detection and morphological detection, including the guiding signs (and/or locating signs), the position of the target area and the like, a space transformation calculation is performed according to the positions, and the position of the vehicle relative to the target area is further calculated, such that the position where the vehicle is located during the automatic parking is located.

Compared with the conventional positioning method mainly relying on the ultrasonic technology, the technical solutions of the invention apply the video locating technology to the positioning of the vehicle, the parking space is arranged at the designated position of the battery swapping area, and the video capture apparatuses (such as cameras) on the periphery of the vehicle are used to record a video and extract the features of the parking space for the high-precision positioning of the vehicle with a final locating error of only 1-2 cm.

The above examples generally illustrate the automatic parking method, the automatic parking device, the intelligent vehicle, and the computer storage medium of the invention. Although only one or more embodiments of the invention are described, it will be appreciated by those skilled in the art that the invention may be embodied in many other forms without departing from the essence or scope thereof. Therefore, the examples and embodiments shown should be considered as illustrative rather than restrictive, and various modifications and replacements may be encompassed by the invention without departing from the scope of the invention as defined by the appended claims.

## Claims

1. An automatic parking method, **characterized by** comprising:
recording a video of surroundings around a vehicle in real time using video capture apparatuses mounted on two sides of the vehicle after the vehicle moves into a start area for vehicle parking defined by limiting signs at four corners, wherein a plurality of guiding signs and the limiting signs are included in the surroundings around the vehicle, and wherein the plurality of guiding signs are 6 double-arrow guiding signs divided into 3 groups and arranged outside of two sides of the start area, and each group of the guiding signs has a unique colour combination;
locating a first guiding sign in a video using a colour space;
extracting features of the first guiding sign by means of morphological detection, the features being a shape feature and an orientation feature of the first guiding sign;
obtaining a real-time position of the vehicle from the features of the first guiding sign and the limiting signs; and
guiding the vehicle to a target area according to the real-time position of the vehicle.

2. The method according to claim 1, **characterized in that** the first guiding sign has a colour characteristic different from the surroundings around the vehicle, and the step of locating the first guiding sign in the video using the colour space comprises:
locating the first guiding sign in the video by means of colour patch analysis.

3. The method according to claim 1, **characterized in that** the step of obtaining the real-time position of the vehicle from the features of the first guiding sign comprises:
determining an absolute position of the first guiding sign from the features of the first guiding sign;
estimating the distances from the video capture apparatuses to the target area by calibrating pixels of the video and from the absolute position of the first guiding sign; and
determining the real-time position of the vehicle at least from the distances from the video capture apparatuses to the target area.

4. The method according to claim 1, **characterized in that** the video capture apparatuses are mounted on rear view mirrors of the vehicle with a field of view covering at least one of the plurality of guiding signs.

5. An automatic parking device, **characterized by** comprising:
video capture apparatuses mounted on two sides of a vehicle and used for recording a video of surroundings around the vehicle in real time after the vehicle moves into a start area for vehicle parking defined by limiting signs at four corners, wherein a plurality of guiding signs and the limiting signs are included in the surroundings around the vehicle, and wherein the plurality of guiding signs are 6 double-arrow guiding signs divided into 3 groups and arranged outside of two sides of the start area, and each group of the guiding signs has a unique colour combination;
a locating apparatus for locating a first guiding sign in a video using a colour space;
a detection apparatus for extracting features of the first guiding sign by means of morphological detection, the features being a shape feature and an orientation feature of the first guiding sign, and obtaining a real-time position of the vehicle from the features of the first guiding sign and the limiting signs; and
a guiding apparatus for guiding the vehicle to a target area according to the real-time position of the vehicle.

6. The device according to claim 5, **characterized in that** the first guiding sign has a colour characteristic different from the surroundings around the vehicle, and the locating apparatus is further configured to locate the first guiding sign in the video by means of colour patch analysis.

7. The device according to claim 5, **characterized in that** the detection apparatus comprises:
a first determination unit for determining the features of the first guiding sign by means of morphological detection;
a second determination unit for determining an absolute position of the first guiding sign from the features of the first guiding sign;
an estimation unit for estimating the distances from the video capture apparatuses to the target area by calibrating pixels of the video and from the absolute position of the first guiding sign; and
a third determination unit for determining the real-time position of the vehicle at least from the distances from the video capture apparatuses to the target area.

8. The device according to claim 5, **characterized in that** the video capture apparatuses are mounted on rear view mirrors of the vehicle with a field of view covering at least one of the plurality of guiding signs.

9. An intelligent vehicle, comprising an automatic parking device according to any one of claims 5 to 8.

10. A computer storage medium, comprising instructions which, when being executed on the automatic parking device according to any one of claims 5 to 8, cause the automatic parking method as claimed in any one of claims 1 to 4 to be performed.

## Patentansprüche

1. Automatisches Parkverfahren, das **dadurch gekennzeichnet ist, dass** es Folgendes umfasst:
Aufzeichnen eines Videos von einer Umgebung eines Fahrzeugs in Echtzeit unter Verwendung von Videoerfassungseinrichtungen, die auf zwei Seiten des Fahrzeugs montiert sind, nachdem sich das Fahrzeug in einen Startbereich zum Fahrzeugparken bewegt hat, der durch Begrenzungszeichen in vier Ecken definiert ist,
wobei eine Vielzahl von Führungszeichen und die Begrenzungszeichen in der Umgebung des Fahrzeugs beinhaltet sind und wobei die Vielzahl von Führungszeichen Führungszeichen mit 6 Doppelpfeilen sind, die in 3 Gruppen geteilt und außerhalb von zwei Seiten des Startbereichs angerdnet sind und jede Gruppe der Führungszeichen eine eindeutige Farbkombination aufweist;
Lokalisieren eines ersten Führungszeichens in einem Video unter Verwendung eines Farbraums;
Extrahieren von Merkmalen des ersten Führungszeichens mittels einer morphologischen Detektion, wobei die Merkmale ein Formmerkmal und ein Ausrichtungsmerkmal des ersten Führungszeichens sind;
Erhalten einer Echtzeitposition des Fahrzeugs anhand der Merkmale des ersten Führungszeichens und der Begrenzungszeichen und
Führen des Fahrzeugs zu einem Zielbereich gemäß der Echtzeitposition des Fahrzeugs.

2. Verfahren nach Anspruch 1, **dadurch gekennzeichnet, dass** das erste Führungszeichen eine Farbcharakteristik aufweist, die sich von der Umgebung des Fahrzeugs unterscheidet, und der Schritt des Lokalisierens des ersten Führungszeichens im Video unter Verwendung des Farbraums Folgendes umfasst:
Lokalisieren des ersten Führungszeichens im Video mittels einer Farbmusteranalyse.

3. Verfahren nach Anspruch 1, **dadurch gekennzeichnet, dass** der Schritt des Erhaltens der Echtzeitposition des Fahrzeugs anhand der Merkmale des ersten Führungszeichens Folgendes umfasst:
Bestimmen einer absoluten Position des ersten Führungszeichens anhand der Merkmale des ersten Führungszeichens;
Schätzen der Abstände von den Videoerfassungseinrichtungen zum Zielbereich durch Kalibrieren von Pixeln des Videos und anhand der absoluten Position des ersten Führungszeichens und
Bestimmen der Echtzeitposition des Fahrzeugs mindestens anhand der Abstände von den Videoerfassungseinrichtungen zum Zielbereich.

4. Verfahren nach Anspruch 1, **dadurch gekennzeichnet, dass** die Videoerfassungseinrichtungen an Rückspiegeln des Fahrzeugs montiert sind, wobei ein Sichtfeld mindestens eines der Vielzahl von Führungszeichen abdeckt.

5. Automatische Parkvorrichtung, die **dadurch gekennzeichnet ist, dass** sie Folgendes umfasst:
Videoerfassungseinrichtungen, die auf zwei Seiten eines Fahrzeugs montiert sind und zum Aufzeichnen eines Videos von einer Umgebung des Fahrzeugs in Echtzeit verwendet werden, nachdem sich das Fahrzeug in einen Startbereich zum Fahrzeugparken bewegt hat, der durch Begrenzungszeichen in vier Ecken definiert ist,
wobei eine Vielzahl von Führungszeichen und die Begrenzungszeichen in der Umgebung des Fahrzeugs beinhaltet sind und wobei die Vielzahl von Führungszeichen Führungszeichen mit 6 Doppelpfeilen sind, die in 3 Gruppen geteilt und außerhalb von zwei Seiten des Startbereichs angerdnet sind und jede Gruppe der Führungszeichen eine eindeutige Farbkombination aufweist;
eine Lokalisierungseinrichtung zum Lokalisieren eines ersten Führungszeichens in einem Video unter Verwendung eines Farbraums;
eine Detektionseinrichtung zum Extrahieren von Merkmalen des ersten Führungszeichens mittels einer morphologischen Detektion, wobei die Merkmale ein Formmerkmal und ein Ausrichtungsmerkmal des ersten Führungszeichens sind, und Erhalten einer Echtzeitposition des Fahrzeugs anhand der Merkmale des ersten Führungszeichens und der Begrenzungszeichen und
eine Führungseinrichtung zum Führen des Fahrzeugs zu einem Zielbereich gemäß der Echtzeitposition des Fahrzeugs.

6. Vorrichtung nach Anspruch 5, **dadurch gekennzeichnet, dass** das erste Führungszeichen eine Farbcharakteristik aufweist, die sich von der Umgebung des Fahrzeugs unterscheidet, und die Lokalisierungseinrichtung ferner dazu ausgelegt ist, das erste Führungszeichen im Video mittels einer Farbmusteranalyse zu lokalisieren.

7. Vorrichtung nach Anspruch 5, **dadurch gekennzeichnet, dass** die Detektionseinrichtung Folgendes umfasst:
eine erste Bestimmungseinheit zum Bestimmen der Merkmale des ersten Führungszeichens mittels einer morphologischen Detektion;
eine zweite Bestimmungseinheit zum Bestimmen einer absoluten Position des ersten Führungszeichens anhand der Merkmale des ersten Führungszeichens;
eine Schätzeinheit zum Schätzen der Abstände von den Videoerfassungseinrichtungen zum Zielbereich durch Kalibrieren von Pixeln des Videos und anhand der absoluten Position des ersten Führungszeichens; und
eine dritte Bestimmungseinheit zum Bestimmen der Echtzeitposition des Fahrzeugs mindestens anhand der Abstände von den Videoerfassungseinrichtungen zum Zielbereich.

8. Vorrichtung nach Anspruch 5, **dadurch gekennzeichnet, dass** die Videoerfassungseinrichtungen an Rückspiegeln des Fahrzeugs montiert sind, wobei ein Sichtfeld mindestens eines der Vielzahl von Führungszeichen abdeckt.

9. Intelligentes Fahrzeug, das eine automatische Parkvorrichtung nach einem der Ansprüche 5 bis 8 umfasst.

10. Computerspeichermedium, das Anweisungen umfasst, die, wenn sie von der automatischen Parkvorrichtung nach einem der Ansprüche 5 bis 8 ausgeführt werden, die Durchführung des in einem der Ansprüche 1 bis 4 beanspruchten automatischen Parkverfahrens veranlassen.

## Revendications

1. Procédé de stationnement automatique, **caractérisé en ce qu'**il comprend :
l'enregistrement d'une vidéo d'environs autour d'un véhicule en temps réel en utilisant des appareils de capture vidéo montés sur deux côtés du véhicule après que le véhicule se déplace pour atteindre une zone de départ pour stationnement de véhicule définie par des signes de limitation à quatre coins,
dans lequel une pluralité de signes de guidage et les signes de limitation sont inclus dans les environs autour du véhicule, et dans lequel la pluralité de signes de guidage sont 6 signes de guidage à double flèche divisés en 3 groupes et agencés à l'extérieur de deux côtés de la zone de départ, et chaque groupe des signes de guidage a une combinaison de couleurs unique ;
la localisation d'un premier signe de guidage dans une vidéo en utilisant un espace de couleurs ;
l'extraction de caractéristiques du premier signe de guidage au moyen de détection morphologique, les caractéristiques étant une caractéristique de forme et une caractéristique d'orientation du premier signe de guidage ;
l'obtention d'une position en temps réel du véhicule à partir des caractéristiques du premier signe de guidage et des signes de limitation ; et
le guidage du véhicule jusqu'à une zone cible selon la position en temps réel du véhicule.

2. Procédé selon la revendication 1, **caractérisé en ce que** le premier signe de guidage a une caractéristique de couleur différente des environs autour du véhicule, et l'étape de la localisation du premier signe de guidage dans la vidéo en utilisant l'espace de couleurs comprend :
la localisation du premier signe de guidage dans la vidéo au moyen d'analyse de charte de couleurs.

3. Procédé selon la revendication 1, **caractérisé en ce que** l'étape de l'obtention de la position en temps réel du véhicule à partir des caractéristiques du premier signe de guidage comprend :
la détermination d'une position absolue du premier signe de guidage à partir des caractéristiques du premier signe de guidage ;
l'estimation des distances depuis les appareils de capture vidéo jusqu'à la zone cible en étalonnant des pixels de la vidéo et à partir de la position absolue du premier signe de guidage ; et
la détermination de la position en temps réel du véhicule au moins à partir des distances depuis les appareils de capture vidéo jusqu'à la zone cible.

4. Procédé selon la revendication 1, **caractérisé en ce que** les appareils de capture vidéo sont montés sur des rétroviseurs du véhicule avec un champ de vue couvrant au moins un de la pluralité de signes de guidage.

5. Dispositif de stationnement automatique, **caractérisé en ce qu'**il comprend :
des appareils de capture vidéo montés sur deux côtés d'un véhicule et utilisés pour enregistrer une vidéo d'environs autour du véhicule en temps réel après que le véhicule se déplace pour atteindre une zone de départ pour stationnement de véhicule définie par des signes de limitation à quatre coins, dans lequel une pluralité de signes de guidage et les signes de limitation sont inclus dans les environs autour du véhicule, et dans lequel la pluralité de signes de guidage sont 6 signes de guidage à double flèche divisés en 3 groupes et agencés à l'extérieur de deux côtés de la zone de départ, et chaque groupe des signes de guidage a une combinaison de couleurs unique ;
un appareil de localisation pour localiser un premier signe de guidage dans une vidéo en utilisant un espace de couleurs ;
un appareil de détection pour extraire des caractéristiques du premier signe de guidage au moyen de détection morphologique, les caractéristiques étant une caractéristique de forme et une caractéristique d'orientation du premier signe de guidage, et obtenir une position en temps réel du véhicule à partir des caractéristiques du premier signe de guidage et des signes de limitation ; et
un appareil de guidage pour guider le véhicule jusqu'à une zone cible selon la position en temps réel du véhicule.

6. Dispositif selon la revendication 5, **caractérisé en ce que** le premier signe de guidage a une caractéristique de couleur différente des environs autour du véhicule, et l'appareil de localisation est en outre configuré pour localiser le premier signe de guidage dans la vidéo au moyen d'analyse de charte de couleurs.

7. Dispositif selon la revendication 5, **caractérisé en ce que** l'appareil de détection comprend :
une première unité de détermination pour déterminer les caractéristiques du premier signe de guidage au moyen de détection morphologique ;
une deuxième unité de détermination pour déterminer une position absolue du premier signe de guidage à partir des caractéristiques du premier signe de guidage ;
une unité d'estimation pour estimer les distances depuis les appareils de capture vidéo jusqu'à la zone cible en étalonnant des pixels de la vidéo et à partir de la position absolue du premier signe de guidage ; et
une troisième unité de détermination pour déterminer la position en temps réel du véhicule au moins à partir des distances depuis les appareils de capture vidéo jusqu'à la zone cible.

8. Dispositif selon la revendication 5, **caractérisé en ce que** les appareils de capture vidéo sont montés sur des rétroviseurs du véhicule avec un champ de vue couvrant au moins un de la pluralité de signes de guidage.

9. Véhicule intelligent, comprenant un dispositif de stationnement automatique selon l'une quelconque des revendications 5 à 8.

10. Support de stockage informatique, comprenant des instructions qui, lorsqu'elles sont exécutées sur le dispositif de stationnement automatique selon l'une quelconque des revendications 5 à 8, font en sorte que le procédé de stationnement automatique selon l'une quelconque des revendications 1 à 4 soit réalisé.
